# EUROPÄISCHE PATENTSCHRIFT

(11) **EP 0 742 087 B1**
(45) Veröffentlichungstag und Bekanntmachung des Hinweises auf die Patenterteilung: **28.02.2001**
(21) Anmeldenummer: 95107087.9
(22) Anmeldetag: 10.05.1995
(51) Int. Cl.: B28B 17/02, B28C 5/40, C04B 28/04, C04B 40/02

(54) **Verfahren zum Herstellen von Flachpressplatten in einem kontinuierlichen Prozess**
Continuous process for making pressed panels
Procédé pour la fabrication en continu de panneaux pressés

(43) Veröffentlichungstag der Anmeldung: 13.11.1996
(73) Patentinhaber: Schwörer Haus GmbH & Co., 72764 Reutlingen (DE)
(72) Erfinder: Cossbau, Uwe, 06869 Wörpen (DE); Lamm, Christian, 06869 Coswig/Anhalt (DE)
(74) Vertreter: Schaumburg, Thoenes, Thurn Patentanwälte

(56) Entgegenhaltungen:
- EP-A- 0 340 620
- WO-A-86/00881
- CHEMICAL ABSTRACTS, vol. 109, no. 8, 22. August 1988, Columbus, Ohio, US; abstract no. 60463g, BAI , XIANMING 'COMPOSITION INORGANIC ARTIFICIAL MARBLE AND ITS MANUFACTURE' Seite 368 ; & CN-A-86 102 478 (STATE CONSTRUCTION MATERIAL INDUSTRY BUREAU)
- PATENT ABSTRACTS OF JAPAN vol. 017, no. 647 (C-1135) 2. Dezember 1993 & JP-A-05 208 854 (SEKISUI CHEM CO LTD) 20. August 1993

## Beschreibung

Die Erfindung betrifft ein Verfahren zum Herstellen von Flachpreßplatten in einem kontinuierlichen Prozeß.

Bei einem bekannten Verfahren nach der EP-A-0 340 620 werden lignozellulosehaltige und/oder zellulosehaltige Teilchen, wie z.B. Holzspäne, Holzfasern etc., mit einem mineralischen Bindemittel und mit Zusatzstoffen vermischt, wobei auf die Oberfläche der getrockneten lignozellulosehaltigen bzw. zellulosehaltigen Teilchen Wasser aufgebracht wird. Beim bekannten Verfahren werden die Teilchen nach so kurzer Zeit mit einem Bindemittelgemisch vermengt, daß das sich an der Teilchenoberfläche befindende Wasser vor jeglichem bzw. einem merkbaren Eindringen in die Teilchen von dem Gemisch aufgenommen wird. Die Teilchen dürfen also nicht mit Wasser getränkt werden, sondern es ist darauf zu achten, daß es beim Aufbringen zu keinem merkbaren Eindringen des Wassers in die Teilchen kommt. Die Vermengung mit dem Bindemittelgemisch erfolgt in so kurzer Zeit nach dem Aufbringen des Wassers auf die Teilchenoberfläche, daß das Wasser von den Teilchen vom Bindemittelgemisch praktisch abgezogen wird. In der Praxis hat sich nun gezeigt, daß die nach dem bekannten Verfahren hergestellten Flachpreßplatten eine geringe Biegefestigkeit haben. Weiterhin können sich Aufquellungen auf den Plattenoberflächen und Risse in den Platten ergeben. Außerdem kann es geschehen, daß die nach dem bekannten Verfahren hergestellten Flachpreßplatten in der Mittelebene nicht ausreichend miteinander verbunden bzw. verfilzt sind, so daß sich Plattenteile voneinander lösen.

Es ist Aufgabe der Erfindung, ein Verfahren zum Herstellen von Flachpreßplatten in einem kontinuierlichen Prozeß anzugeben, bei dem Flachpreßplatten mit hoher Biegefestigkeit erzeugt werden, die die beschriebenen Nachteile des Standes der Technik nicht zeigen.

Durch die Erfindung wird ein Verfahren zum Herstellen von Flachpreßplatten in einem kontinuierlichen Prozeß mit den folgenden Verfahrensschritten bereitgestellt: zellulosehaltige Teilchen werden mit Zusatzmaterialien vermengt; es wird eine erste Teilmenge Wasser zugesetzt und mit dem Gemenge vermischt derart, daß die zellulosehaltigen Teilchen völlig durchfeuchtet werden; das Gemisch wird mit einem ersten Bindemittel, welches eine aluminiumoxidhaltige Komponente enthält, vermischt; es wird eine zweite Teilmenge Wasser zugegeben und vermischt; es wird ein zweites Bindemittel zugegeben, das als Komponente Gips enthält, und vermischt; es wird eine dritte Teilmenge Wasser zugegeben und vermischt; wobei die zweite und/oder die dritte Teilmenge Wasser ein System Verzögerer und/oder Beschleuniger für die Bindemittelkomponenten enthält; es wird ein drittes Bindemittel zugegeben, das als Komponente Portlandzement enthält, und vermischt; die Mischung wird als Vlies aufgeschüttet; das Vlies wird bei einer vorgegebenen Temperatur unter Einhaltung einer bestimmten Preßzeit und eines bestimmten Preßdrucks gepreßt.

Anders als beim Verfahren nach dem Stand der Technik werden bei der Erfindung die zellulosehaltigen Teilchen völlig durchfeuchtet. Dadurch wird erreicht, daß sich im aufgeschütteten Vlies und bei der nachfolgenden Verpressung des Vlieses hinsichtlich des Feuchtigkeitszustandes des Gemisches ein Gleichgewicht einstellt und zwischen den verschiedenen Bestandteilen des Gemisches Feuchtigkeitsausgleichsprozesse ausbleiben bzw. in ihren Auswirkungen verringert sind, durch welche die Verfilzung der Bestandteile innerhalb der Flachpreßplatte wieder aufgelöst werden könnte.

Durch die Aufteilung der Wasserzugabe auf verschiedene Teilmengen und die aufeinanderfolgende Zumischung von Bindemitteln in verschiedenen Verfahrensabschnitten wird eine homogene Durchmischung und ein für die chemische Reaktion wichtiger definierter Aufbau der Schichten der verschiedenen Bestandteile und dadurch eine stabile Struktur der gepreßten Flachpreßplatte erreicht. Insbesondere durch den Zusatz eines Systems aus Verzögerer und Beschleuniger für die Bindemittelkomponenten kann eine Steuerung der kritischen Mischzeiten und der Verweilzeiten zwischen Misch- und Preßvorgang erzielt werden. Durch die Kombination aufeinander abgestimmter Verfahrensschritte können große Flachpreßplatten hergestellt werden, die weder Aufquellungen noch Risse zeigen. Außerdem ist die Biegefestigkeit gegenüber bekannten Flachpreßplatten erhöht und die vorgegebenen Standards und Bauvorschriften können eingehalten werden.

Gemäß einem bevorzugten Ausführungsbeispiel wird als Zusatzmaterial Recyclingmaterial verwendet, vorzugsweise Material, das bei der Bearbeitung von Flachpreßplatten anfällt, insbesondere von nach diesem Verfahren hergestellten Flachpreßplatten. Als Recyclingmaterial können z.B. überschüssige Flachpreßplatten verwendet werden, die mittels einer Hammermühle zerkleinert werden. Durch die Verwendung eines derartigen Recyclingmaterials wird einerseits eine hohe wirtschaftliche Effizienz erreicht und andererseits kann das für das Verfahren erforderliche Material mit kleiner Spangröße, d.h. hohem Feinspananteil, auf einfache Weise erzeugt werden.

Die zugegebene Menge des System-Beschleuniger/Verzöger wird von der Verweilzeit der Mischung zwischen dem Mischvorgang und dem abschließenden Preßvorgang und/oder der Außentemperatur der Mischung eingestellt. Dadurch kann die zum Durchführen des Verfahrens erforderliche Anlage in ihren Transfer- und Taktzeiten optimal eingestellt und ein hoher Durchsatz erzielt werden.

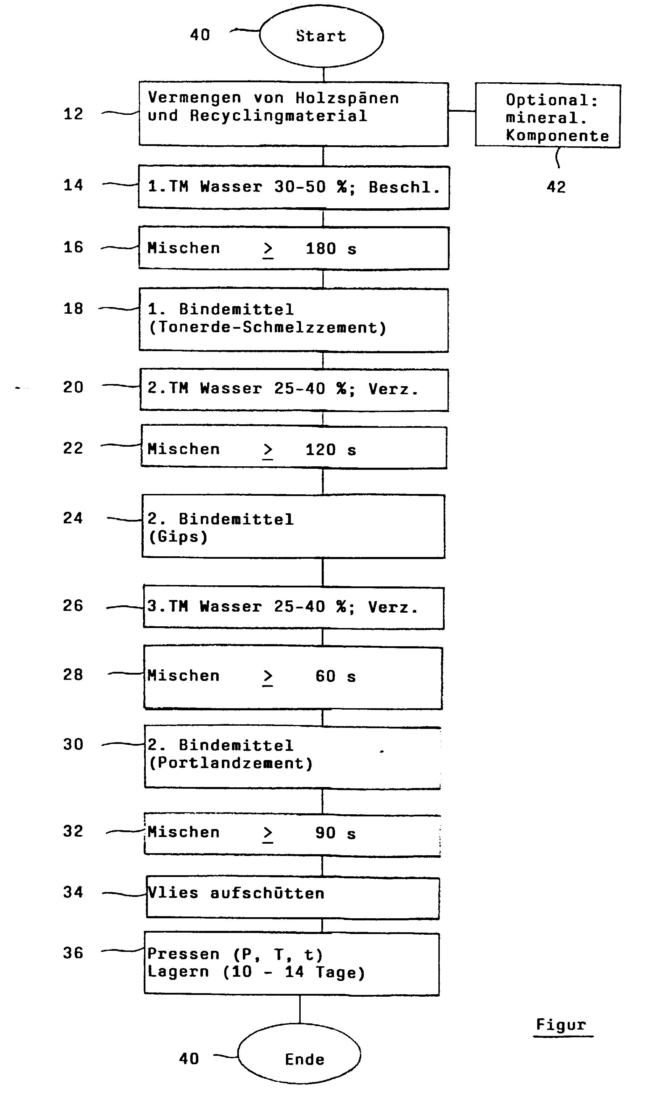

Unter Bezugnahme auf die Figur werden Verfahrensschritte eines Ausführungsbeispiels nach Art einer Ablaufsteuerung erläutert. Nach dem Start des Verfahrens (Schritt 10) werden gemäß Verfahrensschritt 12 Holzspäne, von denen vorzugsweise 40 bis 50 % eine Spangröße kleiner als 2 mm und 50 bis 60 % eine Spangröße größer als 2 mm haben, mit Recycling-Material vermischt. Das Recycling-Material wird aus überschüssigen Flachpreßplatten oder aus Abfall von Flachpreßplatten hergestellt, wobei diese mittels einer Hammermühle zerkleinert werden. Das zerkleinerte Recyclingmaterial hat einen Anteil von 75 % Feinspan mit einer Größe von 0,16 bis 0,5 mm.

Im Verfahrensschritt 14 wird eine erste Teilmenge Wasser von 30 bis 40 % der insgesamt zugegebenen Wassermenge beigegeben. Dem Wasser wird als Beschleuniger Lithiumkarbonat mit einem Anteil von 0,15 bis 0,25 Gew.-% bezogen auf die den späteren Vlies bildende Gesamtmischung zugegeben. Im nachfolgenden Verfahrensschritt 16 wird das Gemisch etwa 180 s lang gemischt. Im Schritt 18 wird als erstes Bindemittel Tonerde-Schmelzzement zugegeben, dessen Anteil etwa 4 bis 5 Gew.-% am Gesamtgewicht der Mischung beträgt.

Im nächsten Schritt 20 wird eine zweite Teilmenge Wasser von 20 bis 40 % der Gesamtwassermenge zusammen mit einem Verzögerungsmittel zugegeben. Als Verzögerungsmittel kann ein handelsüblicher Schnellzementverzögerer verwendet werden. Anschließend erfolgt ein Durchmischen des Gemenges mit einer Mischzeit größer 120 s (Schritt 22). Im nächsten Schritt 24 wird als zweites Bindemittel Gips in Anteilen von 3 bis 4 Gew.-% an der Gesamtmischung zugegeben und die dritte Teilmenge Wasser mit einem Anteil von 25 bis 40 % der Gesamtmenge Wasser verabreicht. Auch der dritten Teilmenge Wasser ist ein Schnellzementverzögerer zugegeben. Die Gesamtmenge an Verzögerungsmittel beträgt ca. 0,4 bis 0,7 Gew.-% am Gesamtgewicht der Mischung. Bekanntlich beginnt Gips, sobald er mit Wasser in Kontakt gelangt, mit dem Abbinden. Durch die Zugabe des Verzögerungsmittels kann dieser Abbindeprozeß optimal gesteuert werden und an die durch den kontinuierlichen Herstellprozeß vorgegebenen Taktzeiten angepaßt werden.

Im nachfolgenden Schritt 28 erfolgt ein Mischen mit einer Mischzeit von annähernd 60 s. Daraufhin wird im Verfahrensschritt 30 als drittes Bindemittel Portland-Zement zugegeben und es erfolgt ein abschließendes Mischen mit einer Mischzeit von etwa 90 s (Verfahrensschritt 32). Die gesamte Mischung hat eine Feuchte von 24,5 bis 27 Gew.-%.

Im Verfahrensschritt 34 wird die Mischung durch eine Aufschüttmaschine zu einem Vlies in einem Wurfstreuprozeß aufgeschüttet. Vliesabschnitte entsprechend den Abmessungen der zu produzierenden Flachpreßplatten werden einer Presse zugeführt, die das Vlies bei 90°C und einem Druck von ca. 300 bar für 20 Minuten preßt. Die Flachpreßplatten werden der Presse entnommen und für ca. zehn bis vierzehn Tage gelagert. Der Verfahrensablauf zum Herstellen einer Flachpreßplatte ist damit beendet (Schritt 40).

Der Verfahrensablauf kann zum Erzielen weiterer Vorteile abgewandelt werden, beispielsweise um die Nichtbrennbarkeit zu erhöhen. Beispielsweise kann dies durch Zusatz einer wasserlöslichen aluminiumoxydhaltigen Komponente (z.B. in Schritt 18) mit Anteilen von 6 bis 12 Gew.-% an der Mischung erfolgen.

Im folgenden werden zwei Beispiele zum Herstellen von Flachpreßplatten nach dem erfindungsgemäßen Verfahren beschrieben.

### Beispiel 1

Zellulosehaltige Teilchen werden so aufbereitet, daß sich annähernd eine Sättigungsfeuchte von 26 Gew.-% Feuchte einstellt. Diese zellulosehaltigen Teilchen, gebildet durch Holzspäne, werden zusammen mit Recycling-Material im Verhältnis 2:1 in einem Zwangsmischer unter Zugabe von 32 % der Gesamtwassermenge gemischt. Die Wassermenge enthält als Beschleunigungsmittel Lithiumkarbonat mit einem Anteil von 0,2 Gew.-% bezogen auf das Gesamtgewicht des später aufgeschütteten Vlieses. Auf diese Mischung wird Tonerde-Schmelzzement zugegeben und vermischt. Danach wird die zweite Teilwassermenge von 34 % der Gesamtwassermenge zusammen mit dem Verzögerungsmittel zugegeben und gemischt. Als Verzögerungsmittel wird Schnellzement-Verzögerer (Addiment) der Firma Baustofftechnik Heidelberg verwendet. Auf diese Mischung wird Gips und anschließend die dritte Teilwassermenge von 34 % der Gesamtwassermenge zusammen mit einem weiteren Anteil an Verzögerungsmittel zugegeben. Der Anteil des Verzögerungsmittels beträgt insgesamt 0,6 Gew.-% am Gesamtgewicht. Anschließend wird der Mischung Portlandzement zugegeben, wobei das Verhältnis der verschiedenen Bindemittel Tonerde-Schmelzzement zu Gips zu Portlandzement etwa 10 % : 10 % : 80 % beträgt. Die Zugabe der verschiedenen Teilwassermengen führen zu einer Feuchte der gesamten Mischung von 26 Gew.-%. Anschließend wird die Mischung zu einem Vlies wurfgestreut und danach in einer Preßvorrichtung bei einer Temperatur von 90°C, einem Druck von 300 bar für 20 Minuten gepreßt. Man erhält eine Flachpreßplatte der Größe bis zu 6,5 x 3 m² mit einer Dicke bis zu 25 mm. Diese Flachpreßplatte entspricht der Baustoffklasse B1 (schwer entflammbar) und erfüllt hinsichtlich der elastomechanischen Eigenschaften die einschlägigen Normen. Risse, Aufquellungen und ein Loslösen von Plattenteilen treten nicht auf.

### Beispiel 2

Es werden die im Beispiel 1 angegebenen Verfahrensschritte durchgeführt, wobei ergänzend vor der Zugabe der ersten Teilwassermenge eine mineralische Komponente mit 6,6 Gew.-% zugegeben wird. Die zugegebene Wassermenge wird so eingestellt, daß das aufgeschüttete Vlies eine Mischungsfeuchte von 23 Gew.-% hat. Man erhält eine Flachpreßplatte der Größe bis zu 6,5 x 3 m² bei einer Dicke bis zu 25 mm, welche der Baustoffklasse A2 (nicht brennbar) entspricht.

## Patentansprüche

1. Verfahren zum Herstellen von Flachpreßplatten in einem kontinuierlichen Prozeß mit den folgenden Verfahrensschritten:
a) zellulosehaltige Teilchen werden mit Zusatzmaterialien vermengt,
b) es wird eine erste Teilmenge Wasser zugesetzt und mit dem Gemenge vermischt derart, daß die zellulosehaltigen Teilchen völlig durchfeuchtet werden,
c) das Gemisch wird mit einem ersten Bindemittel, welches eine aluminiumoxidhaltige Komponente enthält, vermischt,
d) es wird eine zweite Teilmenge Wasser zugegeben und vermischt,
e) es wird ein zweites Bindemittel zugegeben, das als Komponente Gips enthält, und vermischt,
f) es wird eine dritte Teilmenge Wasser zugegeben und vermischt,
g) wobei die zweite und/oder die dritte Teilmenge Wasser ein System Verzögerer und/oder Beschleuniger für die Bindemittelkomponenten enthält,
h) es wird ein drittes Bindemittel zugegeben, das als Komponente Portlandzement enthält, und vermischt,
i) die Mischung wird als Vlies aufgeschüttet,
j) das Vlies wird bei einer vorbestimmten Temperatur unter Einhaltung einer bestimmten Preßzeit und eines vorbestimmten Preßdrucks gepreßt.

2. Verfahren nach Anspruch 1, dadurch **gekennzeichnet**, daß als zellulosehaltige Teilchen Holzspäne verwendet werden, von denen vorzugsweise 40 bis 50 % eine Spangröße kleiner als 2 mm und 50 bis 60 % eine Spangröße größer als 2 mm haben und die vorzugsweise aus der Holzart Fichte oder Kiefer hergestellt sind.

3. Verfahren nach Anspruch 1 oder 2, dadurch **gekennzeichnet**, daß als Zusatzmaterial Recyclingmaterial verwendet wird, vorzugsweise Material, das bei der Bearbeitung von Flachpreßplatten anfällt, insbesondere von nach diesem Verfahren hergestellten Flachpreßplatten.

4. Verfahren nach Anspruch 3, dadurch **gekennzeichnet**, daß als Recyclingmaterial überschüssige Flachpreßplatten verwendet werden, die mittels einer Hammermühle zerkleinert werden, wobei ein Anteil von annähernd 75 % Feinspan mit einer Spangröße von 0,16 bis 0,5 mm erzeugt wird.

5. Verfahren nach einem der vorhergehenden Ansprüche, dadurch **gekennzeichnet**, daß der Anteil der aluminiumoxidhaltigen Komponenten des ersten Bindemittels 4 bis 5 Gew.-% an der Gesamtmischung beträgt.

6. Verfahren nach einem der vorhergehenden Ansprüche, dadurch **gekennzeichnet**, daß das Verhältnis von zellulosehaltigen Teilchen und Zusatzmaterial zu Portlandzement 1 : 2,5 bis 1 : 6 beträgt.

7. Verfahren nach einem der vorhergehenden Ansprüche, dadurch **gekennzeichnet**, daß die Zugabe der zweiten und dritten Teilmenge von Wasser nach vorbestimmten Mischzeiten erfolgt.

8. Verfahren nach einem der vorhergehenden Ansprüche, dadurch **gekennzeichnet**, daß als erste Teilmenge Wasser 30 bis 40 %, vorzugsweise ca. 34 %, als zweite Teilmenge Wasser 30 bis 40 %, vorzugsweise ca. 34 % und als dritte Teilmenge Wasser 25 bis 40 %, vorzugsweise 32 %, der Gesamtwassermenge zugegeben wird.

9. Verfahren nach einem der vorhergehenden Ansprüche, dadurch **gekennzeichnet**, daß der ersten Teilmenge Wasser ein Beschleuniger für die Bindemittelkomponente zugegeben wird.

10. Verfahren nach Anspruch 9, dadurch **gekennzeichnet**, daß als Beschleuniger Lithiumkarbonat verwendet wird.

11. Verfahren nach Anspruch 9 oder 10, dadurch **gekennzeichnet**, daß der Beschleuniger einen Anteil von etwa 0,2 Gew.-% bezogen auf die Gesamtmischung hat.

12. Verfahren nach einem der vorhergehenden Ansprüche, dadurch **gekennzeichnet**, daß der zweiten und/oder der dritten Teilmenge Wasser ein Verzögerer für die Bindemittelkomponenten zugegeben wird.

13. Verfahren nach Anspruch 12, dadurch **gekennzeichnet**, daß der Verzögerer einen Anteil von etwa 0,6 Gew.-% an der Gesamtmischung hat.

14. Verfahren nach einem der vorhergehenden Ansprüche, dadurch **gekennzeichnet**, daß nach Zugabe der ersten Teilmenge Wasser eine Mischzeit von mindestens 180 s eingehalten wird.

15. Verfahren nach einem der vorhergehenden Ansprüche, dadurch **gekennzeichnet**, daß nach der Zugabe der zweiten Teilmenge Wasser und des Verzögerers eine Mischzeit von mindestens 120 s eingehalten wird.

16. Verfahren nach einem der vorhergehenden Ansprüche, dadurch **gekennzeichnet**, daß nach Zugabe des zweiten Bindemittels eine Mischzeit von mindestens 120 s eingehalten wird.

17. Verfahren nach einem der vorhergehenden Ansprüche, dadurch **gekennzeichnet**, daß nach Zugabe der dritten Teilmenge Wasser eine Mischzeit von mindestens 60 s eingehalten wird.

18. Verfahren nach einem der vorhergehenden Ansprüche, **dadurch gekennzeichnet**, daß nach Zugabe des dritten Bindemittels eine Mischzeit von mindestens 90 s eingehalten wird.

19. Verfahren nach einem der vorhergehenden Ansprüche, dadurch **gekennzeichnet**, daß die zellulosehaltigen Teilchen vor dem Vermischen eine Restfeuchte im Bereich des Sättigungsgrades der verwendeten Holzart haben.

20. Verfahren nach einem der vorhergehenden Ansprüche, dadurch **gekennzeichnet**, daß für die Herstellung einer 15 bis 25 mm dicken Flachpreßplatte die Mischung aus zellulosehaltigen Teilchen und Bindemitteln eine Feuchte von 24,5 bis 26 Gew.-% haben.

21. Verfahren nach einem der vorhergehenden Ansprüche, dadurch **gekennzeichnet**, daß zur Herstellung von 15 bis 25 mm dicken Flachpreßplatten die vorgegebene Temperatur beim Pressen im Bereich von mindestens 80 bis maximal 96°C und vorzugsweise bei einer Preßzeit von 15 bis 22 Minuten liegt.

22. Verfahren nach einem der vorhergehenden Ansprüche, dadurch **gekennzeichnet**, daß ein spezifischer Preßdruck von 25 Kp/cm² eingestellt wird.

23. Verfahren nach einem der vorhergehenden Ansprüche, dadurch **gekennzeichnet,** daß nach dem Pressen die Flachpreßplatten gelagert und getrocknet werden, wobei die Lagerzeit vorzugsweise 10 bis 14 Tage beträgt.

24. Verfahren nach einem der vorhergehenden Ansprüche, dadurch **gekennzeichnet**, daß die Flachpreßplatten eine Größe von bis zu 6,5 x 3 m² bei einer Dicke bis zu 25 mm haben.

25. Verfahren nach einem der vorhergehenden Ansprüche, dadurch **gekennzeichnet**, daß vor der Zugabe der ersten Teilmenge Wasser eine mineralische Komponente der Mischung zugegeben wird, vorzugsweise etwa 6 bis 12 Gew.-% der Gesamtmischung.

## Claims

1. A process for the continuous production of laminated particle boards comprising the following process steps:
a) cellulose-containing particles are mixed with an additional material;
b) a first sub-quantity of water is so added and mixed with the mixture that the cellulose-containing particles are completely impregnated;
c) the mixture is mixed with a first binding agent containing an aluminium-oxide-containing component;
d) a second sub-quantity of water is added and mixed;
e) a second binding agent containing gypsum as component is added and mixed;
f) a third sub-quantity of water is added and mixed;
g) the second and/or third sub-quantity of water containing a system of retarding and/or accelerating agents for the binding agent components;
h) a third binding agent containing Portland cement as component is added and mixed;
i) the mixture is shaken on as fleece, and
j) the fleece is pressed at a predetermined temperature for a predetermined pressing time and at a predetermined pressure.

2. A process according to claim 1, characterised in that as cellulose-containing particles there are used wood chips of which preferably 40 to 50% have a chip size less than 2 mm and 50 to 60% having a chip size greater than 2 mm and which are preferably prepared from spruce or pine.

3. A process according to claim 1 or claim 2, characterised in that there is used as additional material recyclable material, preferably material arising in the preparation of laminated particle boards, more particularly laminated particle boards prepared by the process.

4. A process according to claim 3, characterised in that as recyclable material there are used surplus laminated particle boards which are reduced by means of a hammer mill, a proportion of approximately 75% of fine particles having a chip size of from 0.16 to 0.5 mm being produced.

5. A process according to any of the previous claims, characterised in that the proportion of aluminium-oxide-containing components of the first bonding agent is 4 to 5 wt.% of the total mixture.

6. A process according to any of the previous claims, characterised in that the proportion of cellulose-containing particles and additional material to Portland cement is 1 : 2.5 to 1 : 6.

7. A process according to any of the previous claims, characterised in that the addition of the second and third sub-quantities of water is effected in accordance with predetermined mixing times.

8. A process according to any of the previous claims, characterised in that as first sub-quantity of water 30 - 40%, preferably approximately 34%, as second sub-quantity of water 30 to 40%, preferably approximately 34%, and as third sub-quantity of water 25 - 40%, preferably 32%, of total water quantity are added.

9. A process according to any of the previous claims, characterised in that an accelerating agent for the binder component is added to the first sub-quantity of water.

10. A process according to claim 9, characterised in that lithium carbonate is used as accelerating agent.

11. A process according to claim 9 or 10, characterised in that the accelerator has a proportion of approximately 0.2 wt.% referred to the total mixture.

12. A process according to any of the previous claims, characterised in that a retarding agent for the binder components is added to the second and/or third sub-quantity of water.

13. A process according to claim 12, characterised in that the retarding agent has a proportion of approximately 0.6 wt.% of the total mixture.

14. A process according to any of the previous claims, characterised in that a mixing time of at least 180 s is maintained after the addition of the first sub-quantity of water.

15. A process according to any of the previous claims, characterised in that a mixing time of at least 120 s is maintained after the addition of the second sub-quantity of water.

16. A process according to any of the previous claims, characterised in that a mixing time of at least 120 s is maintained after addition of the second binding agent.

17. A process according to any of the previous claims, characterised in that a mixing time of at least 60 s is maintained after the addition of the third sub-quantity of water.

18. A process according to any of the previous claims, characterised in that a mixing time of at least 90 s is maintained after the addition of the third binding agent.

19. A process according to any of the previous claims, characterised in that the cellulose-containing particles have before mixing a residual humidity of approximately the degree of saturation of the particular kind of wood used.

20. A process according to any of the previous claims, characterised in that the mixture of cellulose-containing particles and binding agents used for the preparation of a 15 - 25 mm thick laminated particle board has a humidity of 24.5 to 26 wt.%.

21. A process according to any of the previous claims, characterised in that for the preparation of 15 - 25 mm thick laminated particle boards the prescribed temperature during pressing is in the region of from at least 80 to a maximum of 96°C, and preferably remains at this level during a pressing time of 15 to 22 minutes.

22. A process according to any of the previous claims, characterised in that a specific pressing pressure of 25 Kp/cm² is maintained.

23. A process according to any of the previous claims, characterised in that the laminated particle boards are stored and dried after pressing, the storage time being preferably from 10 to 14 days.

24. A process according to any of the previous claims, characterised in that the laminated particle boards have a size of up to 6.5 x 3 m² with a thickness of up to 25 mm.

25. A process according to any of the previous claims, characterised in that before the addition of the first sub-quantity of water a mineral component is added to the mixture, preferably approximately 6 to 12 wt.% of the total mixture.

## Revendications

1. Procédé de fabrication de panneaux de particules disposées à plat dans un processus continu comprenant les étapes suivantes :
a) des particules à base de cellulose sont mélangées avec des additifs,
b) une première quantité partielle d'eau est ajoutée et mélangée avec le mélange de telle façon que les particules à base de cellulose soient complètement trempées,
c) le mélange est mélangé avec un premier agent liant comprenant une composante à base d'oxyde d'aluminium,
d) une deuxième quantité partielle d'eau est ajoutée et mélangée,
e) un deuxième agent liant contenant du plâtre comme composante est ajouté et mélangé,
f) une troisième quantité partielle d'eau est ajoutée et mélangée,
g) les deuxième et/ou troisième quantités partielles d'eau comprenant un système retardateur et/ou accélérateur pour les composantes d'agents liants
h) un troisième agent liant contenant du ciment Portland comme composante est ajouté et mélangé,
i) le mélange est couché pour obtenir une nappe,
j) la nappe est comprimée sous une température prédéterminée, en respectant un temps de compression déterminé et une pression de compression prédéterminée.

2. Procédé selon la revendication 1, caractérisé en ce qu'en tant que particules à base de cellulose, on utilise des copeaux de bois dont 40 à 50% présentent de préférence une taille de copeau inférieure à 2 mm et 50 à 60 % une taille de copeau supérieure à 2 mm, et qui proviennent de préférence d'essences de bois épicéa ou pin.

3. Procédé selon la revendication 1 ou 2, caractérisé en ce qu'en tant qu'additif on utilise du matériau recyclé, de préférence un matériau résultant du traitement de panneaux de particules disposées à plat, notamment de panneaux de particules disposées à plat fabriqués selon le présent procédé.

4. Procédé selon la revendication 3, caractérisé en ce qu'en tant que matériau recyclé on utilise des panneaux de particules disposées à plat excédentaires broyés à l'aide d'un broyeur à marteaux produisant une proportion de 75 % environ de copeaux fins d'une taille de copeau comprise entre 0,16 et 0,5 mm.

5. Procédé selon l'une des revendications précédentes, caractérisé en ce que la proportion des composantes à base d'oxyde d'aluminium du premier agent liant est de 4 à 5 % en poids de l'ensemble du mélange.

6. Procédé selon l'une des revendications précédentes, caractérisé en ce que le rapport entre les particules à base de cellulose et les additifs, et le ciment Portland, est de 1 : 2,5 à 1 : 6.

7. Procédé selon l'une des revendications précédentes, caractérisé en ce que l'addition de la deuxième et de la troisième quantités partielles d'eau est effectuée après des temps de mélange prédéterminés.

8. Procédé selon l'une des revendications précédentes, caractérisé en ce que l'on ajoute une première quantité partielle d'eau de 30 à 40 %, de préférence 34 % environ, une deuxième quantité partielle d'eau de 30 à 40 %, de préférence 34 %, et une troisième quantité partielle d'eau de 25 à 40 %, de préférence 32 %, de la quantité d'eau totale.

9. Procédé selon l'une des revendications précédentes, caractérisé en ce que l'on ajoute à la première quantité partielle d'eau un accélérateur pour les composantes d'agents liants.

10. Procédé selon la revendication 9, caractérisé en ce que l'on utilise du carbonate de lithium comme accélérateur.

11. Procédé selon la revendication 9 ou 10, caractérisé en ce que l'accélérateur représente une proportion de 0,2 % en poids environ par rapport à l'ensemble du mélange.

12. Procédé selon l'une des revendications précédentes, caractérisé en ce que l'on ajoute à la deuxième et/ou à la troisième quantités partielles d'eau un retardateur pour les composantes d'agents liants.

13. Procédé selon la revendication 12, caractérisé en ce que le retardateur représente une proportion de 0,6 % en poids environ par rapport à l'ensemble du mélange.

14. Procédé selon l'une des revendications précédentes, caractérisé en ce qu'après l'addition de la première quantité partielle d'eau, on observe un temps de mélange d'au moins 180 sec.

15. Procédé selon l'une des revendications précédentes, caractérisé en ce qu'après l'addition de la deuxième quantité partielle d'eau et du retardateur, on observe un temps de mélange d'au moins 120 sec.

16. Procédé selon l'une des revendications précédentes, caractérisé en ce qu'après l'addition du deuxième agent liant, on observe un temps de mélange d'au moins 120 sec.

17. Procédé selon l'une des revendications précédentes, caractérisé en ce qu'après l'addition de la troisième quantité partielle d'eau, on observe un temps de mélange d'au moins 60 sec.

18. Procédé selon l'une des revendications précédentes, caractérisé en ce qu'après l'addition du troisième agent liant, on observe un temps de mélange d'au moins 90 sec.

19. Procédé selon l'une des revendications précédentes, caractérisé en ce que les particules à base de cellulose, avant le mélange, présentent une humidité résiduelle proche du degré de saturation de l'espèce de bois utilisée.

20. Procédé selon l'une des revendications précédentes, caractérisé en ce que, pour la fabrication d'un panneau de particules disposées à plat d'une épaisseur de 15 à 25 mm, le mélange de particules à base de cellulose et d'agents liants présente une humidité de 24,5 à 26 % en poids.

21. Procédé selon l'une des revendications précédentes, caractérisé en ce que, pour la fabrication d'un panneau de particules disposées à plat d'une épaisseur de 15 à 25 mm, la température prédéterminée, lors de la compression, se situe dans une plage d'au moins 80 jusqu'à 96°C au maximum, le temps de compression étant de préférence compris entre 15 et 22 minutes.

22. Procédé selon l'une des revendications précédentes, caractérisé en ce que l'on règle une pression de compression spécifique de 25 Kp/cm².

23. Procédé selon l'une des revendications précédentes, caractérisé en ce qu'après la compression, les panneaux de particules disposées à plat sont stockés et séchés, le temps de stockage étant de préférence compris entre 10 et 14 jours.

24. Procédé selon l'une des revendications précédentes, caractérisé en ce que les panneaux de particules disposées à plat présentent une taille allant jusqu'à 6,5 x 3 m² pour une épaisseur allant jusqu'à 25 mm.

25. Procédé selon l'une des revendications précédentes, caractérisé en ce qu'avant l'addition de la première quantité partielle d'eau, une composante minérale est ajoutée au mélange, de préférence de 6 à 12 % en poids environ de l'ensemble du mélange.
